# EUROPÄISCHE PATENTSCHRIFT

(11) **EP 2 840 377 B1**
(45) Veröffentlichungstag und Bekanntmachung des Hinweises auf die Patenterteilung: **21.09.2016**
(21) Anmeldenummer: 13181135.8
(22) Anmeldetag: 21.08.2013
(51) Int. Cl.: G01M 7/08, G01N 3/10, H01R 31/00, G01N 3/30, G01N 3/313

(54) **Verfahren und Vorrichtung zum Testen eines flächigen Bauelements bezüglich Beständigkeit gegenüber Druckeinwirkung**
Method and device for testing a laminar construction element for resistance to pressure
Procédé et dispositif de test d'un élément de construction plat relatif à la résistance à la pression

(43) Veröffentlichungstag der Anmeldung: 25.02.2015
(73) Patentinhaber: Sälzer GmbH, 35037 Marburg (DE)
(72) Erfinder: Sälzer, Heinrich, 35037 Marburg (DE)
(74) Vertreter: Bauer, Dirk

(56) Entgegenhaltungen:
- EP-A1- 2 645 076
- WO-A1-2011/104126
- US-A- 3 248 924
- US-A- 5 197 323

## Beschreibung

Die Erfindung betrifft ein Verfahren zum Testen eines flächigen Bauelements bezüglich Beständigkeit gegenüber Druckeinwirkung gemäß dem Oberbegriff des Anspruchs 1.

Ferner betrifft die vorliegende Erfindung eine Vorrichtung, mit der das vorgenannte Verfahren durchgeführt werden kann.
Als flächige Bauelemente werden im Sinne der vorliegenden Anmeldung sämtliche Bauelemente verstanden, die zur Einhausung von Räumen herangezogen werden können. Beispielsweise zählen zu flächigen Bauelementen Türen, Tore und Fenster jeglicher Art sowie Fassaden-, Wand-, oder Dachkonstruktionen sowie Teile davon.

### Stand der Technik

Aus dem Stand der Technik sind insbesondere zwei Verfahren zum Testen des Widerstandes gegen Explosionsdruck bekannt, mittels der die geprüften Bauteile in Widerstandsklassen eingeordnet werden können. Das erste, sehr kostspielige und aufwändige Verfahren ist der so genannte Freilandversuch, bei dem das zu testende Bauteil auf einem geeigneten Gelände aufgestellt wird und eine Druckbelastung durch Detonation einer bestimmten Menge eines Sprengstoffs in einem bestimmten Abstand zu dem Bauteil hervorgerufen wird. In der DIN EN 13123-2 werden die Anforderungen sowie die Klassifizierung von EXR1 bis EXR5 und in der DIN EN 13124-2 wird das Prüfverfahren als solches geregelt. Derartige Freilandversuche können jedoch aufgrund des erheblichen Lärms und eines nicht unerheblichen Sicherheitsrisikos für das Umfeld lediglich an bestimmten Orten, wie beispielsweise auf Truppenübungsplätzen o.ä., ausgeführt werden und sind darüber hinaus nicht bei allen Witterungsbedingungen durchführbar.

Das zweite übliche Prüfverfahren ist der Explosionsdruck-Versuch am Stoßrohr, dessen Prüfablauf in der DIN EN 13124-1 geregelt ist. Die Klassifizierung der geprüften Körper wird in der DIN EN 13123-1 festgelegt. Für den Versuch wird ein etwa 50 m langes Rohr mit einem Durchmesser von etwa 2 m bis 3 m mittels eines über dem Durchmesser eingespannten Stahlblechs in zwei Bereiche unterteilt, wobei in dem dem Prüfkörper abgewandten Bereich des Stoßrohres, der als Druckrohr bezeichnet wird, ein Druck aufgebaut wird, während in dem dem Prüfkörper zugewandten Bereich des Stoßrohres Umgebungsdruck vorliegt. Das die beiden Bereiche unterteilende Stahlblech ist mit einer Sprengladung (z.B. X-förmige Sprengschnur) versehen, die nach ausreichendem Druckaufbau in dem Druckrohr gezündet wird, so dass durch die Sprengung das Stahlblech zerstört und dadurch ein Verbindungsquerschnitt von dem Druckrohr zu dem dem Bauelement zugeordneten Rohrabschnitt geschaffen wird. Infolgedessen bewegt sich eine Druckwelle mit großer Geschwindigkeit durch das Stoßrohr auf das zu prüfende Bauelement und trifft dieses schlagartig.

Zwar erfolgt die Detonation des Sprengstoffs beim Stoßrohr-Versuch innerhalb des Stoßrohres und somit in einem gegenüber dem Umfeld abgeschlossenen Bereich, jedoch ist der Versuchsaufbau sehr aufwändig und erfordert aufgrund der Abmessungen des Stoßrohres einen großen Platzbedarf. Das hohe Gewicht der einzelnen Stoßrohrkomponenten erfordert darüber hinaus entsprechende technische Hilfsmittel bei dem jeweiligen Einbau des Stahlblechs, was die Handhabung des Versuchsaufbaus weiter erschwert. Darüber hinaus ist das Stahlblech nach jedem Versuch zu ersetzen. Schließlich sind auch beim Stoßrohr-Versuch kaum vorbestimmte klimatische Bedingungen mit geringen Toleranzen einhaltbar, da in der Regel der Prüfkörper durch die große Länge des Stoßrohres außen im Freien vor dem Stoßrohr montiert wird.

Aus der bisher nicht veröffentlichten europäischen Patentanmeldung EP 12161734.4 ist ein Verfahren zum Testen eines flächigen Bauelements bezüglich seiner Beständigkeit gegenüber Druckeinwirkung bekannt, bei dem eine Druckeinwirkung, wie beispielsweise eine Explosion oder ein Erdbeben, ähnlich zu der vorliegenden Erfindung simuliert wird. Ein zu testendes flächiges Bauelement wird in druckdichter Weise in einem Halterahmen eingebaut, so dass eine druckdicht abgeschlossen Druckkammer gebildet wird. In einem Druckbehälter mit kompressiblem Fluid wird ein Druck größer dem Umgebungsdruck erzeugt, wobei ein freier Verbindungsquerschnitt von dem Druckbehälter zu der Druckkammer mittels eines Absperrelements absperrbar ist, wobei das Überführen des Absperrelements von einer Schließstellung in eine Öffnungsstellung zerstörungsfrei und reversibel erfolgt.
Dieses Verfahren ermöglicht im Vergleich zu dem Freilandversuch und dem Stoßrohr-Versuch eine deutlich kostengünstigere und Platz sparendere Versuchsdurchführung. Zwar ermöglicht das Verfahren die Simulation von verschiedenartigen Druckbelastungen, jedoch bedarf es für die Einstellung einer Druckverteilung ein großes Geschick. Insbesondere ist es schwierig die Druckverteilung auf einen äußerst kurzen Zeitraum, wie beispielsweise die Dauer von nur 20 Millisekunden, zu begrenzen.

### Aufgabe

Aus diesem Grund ist es Aufgabe der vorliegenden Erfindung, das Verfahren aus der EP 12161734.4, oder das Verfahren aus den weiteren Dokumenten des Standes der Technik wie der EP2465075 und US3248924, weiter zu entwickeln und insbesondere die Einstellung verschiedenartiger Druckbelastungen zu vereinfachen.

### Lösung

Diese Aufgabe wird erfindungsgemäß dadurch gelöst, dass
die mindestens eine Entlastungsöffnung durch ein wahlweise freigebendes oder verschließendes Entlastungsventil gebildet wird, das als Rückschlagventil in Form eines Klappenventils ausgebildet ist, das vorzugsweise lediglich eine Druckentlastung der Druckkammer zulässt.

Im Gegensatz zu der Absperreinrichtung im Stoßrohr-Verfahren, die aus einem Stahlblech besteht, das mittels einer daran angebrachten Sprengladung irreversibel zerstört wird und somit nach dem Versuch nicht mehr verwendbar ist, ist die Absperreinrichtung gemäß der vorliegenden Erfindung zerstörungsfrei und reversibel betätigbar, was bedeutet, dass sie nach Erzeugung der Druckbelastung nach unterschiedlichen Zeitspannen nach dem Öffnungszeitpunkt und gegebenenfalls unterschiedlich schnell oder langsam wieder geschlossen werden kann. Auf diese Weise können verschiedene Verläufe einer Druckbelastung (Spitzendruck, Druckgradienten, Belastungsdauer, etc.) simuliert werden.

Die Druckverteilung über die Zeit kann bei verschiedenen Explosionen stark variieren. Während bei einer petrochemischen Explosion zu Beginn ein Druck von etwa 50 kPa vorliegt, der nach 150 ms abgeklungen ist, entsteht bei einer TNT-Explosion ein Anfangsdruck von etwa 200 kPa, der bereits nach rund 25 ms auf Null fällt. Im Falle von Erdbeben, die ebenfalls mit dem Verfahren simuliert werden können, treten typischerweise über einen Zeitraum von mehreren Sekunden oder sogar einigen Minuten bis hin zu Stunden Erdbewegungen auf, durch die Bauteile beansprucht werden.

Bei dem Verfahren nach der europäischen Patentanmeldung 12161734.4, bei dem die Druckkammer druckdicht geschlossen ist, hat sich gezeigt, dass der aufgebrachte Druck beziehungsweise die Einwirkungsdauer des Drucks eine Dauer von 100 ms nicht unterschreiten kann, da das Absperrelement für seine Reaktion beim Öffnen und Schließen einen gewissen Zeitraum benötigt. Daraus resultiert, dass die zu testenden Bauelemente einem deutlich zu hohen Impuls ausgesetzt sind, als für ein Erfüllen der Anforderungen nötig wäre.

Um den Impuls abzuschwächen, ist es gemäß der vorliegenden Erfindung vorgesehen, während der Druckeinwirkung auf das Bauelement Fluid aus der Druckkammer abzulassen. Nach dem Auftreffen des Drucks auf das Bauelement kann der reflektierte Druck aus der Druckkammer entweichen, wodurch die Einwirkungsdauer des Drucks verkürzt wird. Auch kann das Ablassen des Fluids so vorgesehen sein, dass ein bestimmter Anteil des Fluids schon entweicht, bevor die sich bildende Druckspitze auf das Bauelement wirkt.

Je nachdem, welcher Impuls simuliert werden soll, kann das Ablassen des Fluids während der gesamten Zeit der Druckeinwirkung auf das Bauelement erfolgen oder nur während eines Zeitintervalls. Bei letztgenannter Alternative sollte die Anfangszeit des Zeitintervalls vorzugsweise nach einer Startzeit liegen, zu der das Absperrelement der Absperreinrichtung in die Öffnungsstellung überführt wird und dessen Endzeit vorzugsweise vor oder nach einer Schließzeit liegen, zu der das Absperrelement der Absperreinrichtung wieder in die Schließstellung überführt wird.

Damit die Strömung des abgelassenen Fluids die Strömung des Drucks auf das Bauelement in strömungstechnischer Sicht nicht beeinflusst, sollte die Strömungsrichtung des Fluids in einen in die Druckkammer mündenden Mündungsquerschnitt der Verbindungsleitung von der Strömungsrichtung des Fluids beim Austritt aus der Entlastungsöffnung abweichen. Dabei sollte vorzugsweise die Richtung der Strömung des Fluids beim Austritt aus der Entlastungsöffnung senkrecht zu einer durch das Bauelement definierten Belastungsebene verlaufen.

Vorrichtungsgemäß wird die vorstehende Aufgabe durch eine Vorrichtung gemäß dem Oberbegriff des Anspruchs 4 gelöst, bei dem das Absperrelement zerstörungsfrei von der Schließstellung in die Öffnungsstellung und umgekehrt überführbar ist und die Absperreinrichtung in der mindestens einen Verbindungsleitung angeordnet ist, wobei mindestens eine die Druckkammer mit der Umgebung verbindende Entlastungsöffnung vorhanden ist. Mit dieser Vorrichtung ist das zuvor beschriebene Verfahren auf besonders einfache Weise durchführbar, wobei die hinsichtlich des Verfahrens beschriebenen Vorteile auch auf die Vorrichtung zutreffen. Insbesondere ergibt sich ferner der Vorteil, dass die Vorrichtung auch dazu herangezogen werden kann, die Anschlusssituation des Bauelements an ein das Bauelement umgebenes Mauerwerk oder eine das Bauelement umgebende Betonwand oder ähnliche Gebäudeteile auf ihre Druckbeständigkeit hin zu prüfen. Auch kann das Mauerwerk, die Betonwand oder ähnliche Gebäudeteile selbst auf seine bzw. ihre Druckbeständigkeit geprüft werden.

Gemäß einer vorteilhaften Ausbildung der erfindungsgemäßen Vorrichtung ist es vorgesehen, dass die mindestens eine Entlastungsöffnung, vorzugsweise mehrere Entlastungsöffnungen, in mindestens einer die Wand mit dem Rahmen verbindenden Stirnseite, vorzugsweise in mehreren Stirnseiten, angeordnet ist bzw. sind. Die Anordnung der Entlastungsöffnungen in den Stirnseiten ist von Vorteil, da die Fluidströme, die zum einen auf das zu testende Bauwerk wirken und zum anderen aus der Druckkammer entweichen sollen, sich nicht gegenseitig stören oder kollidieren.

Vorteilhafterweise kann ein Entlastungsquerschnitt der mindestens einen Entlastungsöffnung parallel zu der Belastungsebene ausgerichtet sein.

Eine Ausgestaltung der erfindungsgemäßen Vorrichtung verfügt über im Querschnitt viertelkreisförmige Umlenkelemente, mit denen eine parallel zu der Belastungsebene gerichtete Strömung des Fluids um 90° in eine senkrecht zu der Belastungsebene gerichtete Strömung umlenkbar ist, wobei vorzugsweise eine Tangentialebene an ein Umlenkelement mit der Belastungsebene oder einer von Vorderseiten der Rahmenschenkel gebildeten Rahmenebene zusammenfällt.

Um den gesamten Entlastungsquerschnitt unterschiedlich einstellen zu können, ist es vorteilhaft, wenn mindestens ein die mindestens eine Entlastungsöffnung wahlweise freigebendes oder verschließendes Entlastungsventil vorgesehen ist, das vorzugsweise lediglich eine Druckentlastung der Kammer zulässt. Vorzugsweise kann das Entlastungsventil als Rückschlagventil ausgebildet sein. Dabei kann das Rückschlagventil auch als Klappenventil ausgebildet sein.

Alternativ kann auch eine einfache Klappe am Entlastungsquerschnitt angeordnet sein, die ein Entweichen des Fluids erlaubt. Auch ist die Anordnung einer aufschraubbaren Abdeckung denkbar.

Bezüglich der Abmessungen der Entlastungsöffnung ist es vorteilhaft, wenn eine parallel zu dem jeweiligen Rahmenschenkel gemessene Länge der zugeordneten Entlastungsöffnung mindestens 50 %, vorzugsweise mindestens 70 %, vorzugsweise mindestens 80 %, der entsprechenden parallelen Länge des Bauelements aufweist.

Um die Vorrichtung so flexibel wie möglich einsetzen zu können und den gewünschten Impuls variabel einstellen zu können, ist es vorgesehen, dass die Größe der mindestens einen Entlastungsöffnung einstellbar ist. Dies kann vorzugsweise mittels eines Schiebeelements oder eines abnehmbaren Abdeckelements erfolgen, das jeweils die Entlastungsöffnung unterschiedlich weit überdeckt.

Gemäß einer vorteilhaften Ausgestaltung der Erfindung beträgt die Fläche eines von der Entlastungsöffnung gebildeten Entlastungsquerschnitts zwischen 50 cm² und 100 cm², vorzugsweise zwischen 200 cm² und 1000 cm². Dabei ist es ferner vorteilhaft, wenn der Entlastungsquerschnitts variiert werden kann, so dass dieser individuell an die gewünschten Erfordernisse bezüglich der Druckdauer und des Einwirkungsintervalls angepasst werden kann.

Schließlich kann es vorteilhaft sein, wenn ein minimaler Abstand zwischen einem Mündungsquerschnitt der Verbindungsleitung zwischen dem Druckbehälter und der Druckkammer und einer Entlastungsöffnung mindestens 10 mm vorzugsweise 40 mm, beträgt.

### Ausführungsbeispiel

Besonders deutlich wird die Erfindung anhand der nachfolgenden Ausführungsbeispiele zu jeweils einem erfindungsgemäßen Gebäudeabschluss.

Es zeigt
- Fig. 1:: einen Horizontalschnitt durch eine Druckkammer einer ersten erfindungsgemäßen Vorrichtung ersten erfindungsgemäßen Gebäudeabschluss und
- Fig. 2:: einen Horizontalschnitt durch eine Druckkammer einer zweiten erfindungsgemäßen Vorrichtung.

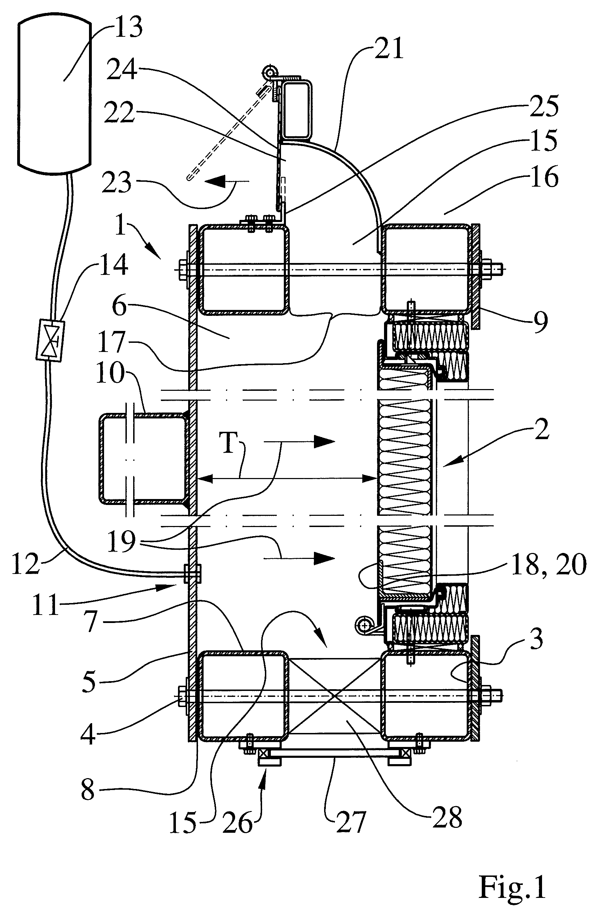

In der Figur 1 ist ein Horizontalschnitt durch eine Druckkammer 6 einer erfindungsgemäßen Vorrichtung 1 zum Testen des Widerstandes eines als Stahlsicherheitstür ausgebildeten Bauelements 2 gegen eine Druckeinwirkung gezeigt. Die Vorrichtung 1 umfasst einen Halterahmen 3, der aus vier Rahmenschenkeln jeweils in Form eines Vierkantrohres zusammengesetzt ist. Die Stahlsicherheitstür ist mit ankerartigen Befestigungsmitteln, auf die hier nicht im Einzelnen eingegangen wird, umlaufend an dem Halterahmen 3 befestigt. Der Halterahmen 3 ist mittels über seinen Umfang verteilter Schrauben 4 mit einer Wand 5 verbunden, die in einem Abstand parallel zu dem Halterahmen 3 angeordnet ist. Unmittelbar an der Wand 5 ist ein Kammerrahmen 7 angeordnet, der fluchtend zu dem Halterahmen 3 positioniert ist und analog zu dem Halterahmen 3 aufgebaut ist. Halterahmen 3 und Kammerrahmen 7 weisen einen lichten Abstand zueinander auf, der etwa dem Durchmesser eines Vierkantrohres des Halterahmens 3 bzw. Kammerrahmens 7 entspricht. Somit ist eine Druckkammer 6 geschaffen, die bei eingebauter Stahlsicherheitstür etwa eine Tiefe T entsprechend der Tiefe des zweimaligen Kammerrahmens 7 besitzt, d. h. bei einem Kammerrahmen 7 von 120 mm beträgt die Tiefe T der Druckkammer 240 mm. Zwischen der Wand 5 und dem Kammerrahmen 7 ist umlaufend ein Dichtstreifen 8 in einer Stärke von 3 mm vorgesehen.

Aus Gründen einer höheren Steifigkeit ist auf der dem Kammerrahmen 7 abgewandten Seite des Halterahmens 3 umlaufend ein Flachprofil 9 vorgesehen, das nach außen hin mit dem Halterahmen 3 fluchtet und nach innen hin über den Halterahmen 3 vorsteht und im Versagensfall der Befestigungsmittel ein Wegschleudern des Bauelements 2 aus dessen Halterahmen 3 verhindern würde.

Die die Rückwand der Druckkammer 6 bildende Wand 5, die von einer 10 mm starken Stahlplatte gebildet wird, ist auf ihrer der Druckkammer 6 abgewandten Seite hin mit sich horizontal über die Breite der Vorrichtung 1 erstreckenden Profilen 10 verstärkt, die aus Stahlrohr-Profilen gebildet werden, wobei übereinander verlaufende Profile 10 einen lichten Abstand von 120 mm zueinander aufweisen. Die Profile 10 sind randseitig über ihre gesamte Länge mit der Rückseite der Wand 5 punktuell verschweißt.

Die Wand 5 weist drei zueinander beabstandete Anschweißnippel 11 auf, von denen in der Figur 1 lediglich einer dargestellt ist. An die Anschweißnippel 11 ist jeweils eine Verbindungsleitung 12 zu einem Druckbehälter 13 angeschossen, der die Druckkammer 6 mit dem zur Durchführung eines Tests vorgesehenen Druck versorgt. Bei den Verbindungsleitungen 12 kann es sich um Rohrleitungen und/oder Schläuche handeln, die entweder jeweils von dem Druckbehälter 13 gespeist werden, oder aber zunächst zu einer Versorgungsleitung zusammen geführt werden, wobei die Versorgungsleitung zu dem Druckbehälter 13 führt, die in diesem Fall ein einziges Absperrelement 14 enthält.

Je nach Art der Rohrleitungsführung besitzen entweder alle Verbindungsleitungen 12 oder die Versorgungsleitung ein Absperrelement 14, beispielsweise in Form eines Kugelhahns, mittels dem die Versorgung der Druckkammer 6 mit Druck initiiert, gestoppt oder wieder initiiert werden kann. Vor der Durchführung eines Test wird beispielsweise über einen nicht dargestellten Kompressor Druck im Druckbehälter 13 erzeugt und nach Erreichen des erforderlichen Drucks das Absperrelement 14 oder die Absperrelemente geöffnet, so dass in der Druckkammer 6 die Druckwelle einer Explosion simuliert wird. Durch die Anordnung mehrerer Verbindungsleitungen (12) und Anschweißnippel (11) an unterschiedlichen Stellen der Wand (5) ist es möglich, bestimmte Punkte des Bauelementes (2) im Hinblick auf ihre Belastbarkeit zu testen.

Die Vorrichtung 1 gemäß der Figur 1 besitzt eine Entlastungsöffnung 15, die sich auf einer ersten seitlichen Stirnseite 16 der Vorrichtung 1 befindet und die einen Entlastungsquerschnitt 17 bildet, der parallel zu einer Belastungsebene 18 ausgerichtet ist, wobei die Belastungsebene 18 als die Ebene des Bauelements 2 definiert ist, auf die die Druckwelle, die mit Pfeilen 19 angedeutet wird, auftrifft, also in der Figur 1 die der Druckkammer 6 zugewandte Oberfläche 20 der Sicherheitstür.

Im Bereich der Entlastungsöffnung 15 ist die Vorrichtung 1 mit einem im Querschnitt viertelkreisförmigen Umlenkelement 21 ausgestattet, mit dem die Strömung des aus der Druckkammer 6 austretenden Fluids - ausgehend von einer Ausrichtung parallel zu der Belastungsebene 18 - um 90 Grad umgelenkt wird, so dass das eine Austrittsöffnung 22 verlassende Fluid, das mit einem Pfeil 23 angedeutet ist, parallel zu dem auf die Belastungsebene 18 auftreffenden Druck ausgerichtet ist. Das aus der Austrittsöffnung 22 austretende Fluid ist in der entgegen gesetzten Richtung zu der Druckwelle ausgerichtet, die auf das Bauelement 2 wirkt.

Die Austrittsöffnung 22 ist mit einer schwenkbaren Klappe 24 versehen, wobei ein Anschlag 25 der Klappe 24 in seiner Länge veränderbar ist, so dass die Größe des Querschnitts der Austrittsöffnung 22 veränderbar ist. Die Klappe 24 beziehungsweise der Anschlag 25 sind jeweils in einer gepunkteten Linie in einer geöffneten Stellung beziehungsweise in einer verlängerten Stellung dargestellt. Um die verlängerte Stellung zu erhalten, kann der als Winkel ausgebildete Anschlag 25, der mit einer Verschraubung befestigt ist, durch einen Winkel mit anderer Schenkellänge ausgetauscht werden.

Alternativ ist auf einer gegenüberliegenden seitlichen Stirnseite 26 die Vorrichtung 1 ebenfalls mit einer Entlastungsöffnung 15 versehen, vor die eine Druck-Ableitplatte 27 angebracht ist. Die Druck-Ableitplatte 27 ist in Teilbereichen mit hinsichtlich ihrer Größe und Anzahl verschiedenen Öffnungen versehen, die zur Regulierung des Druckabbaus abgedeckt oder aufgedeckt werden können, was der Figur 1 im Einzelnen nicht zu entnehmen ist.

Zwischen Halterahmen 3 und Kammerrahmen 7 sind umlaufend und beabstandet zueinander kurze Abstandhalter 28 angeordnet, von denen einer an der seitlichen Stirnseite 26 dargestellt ist.

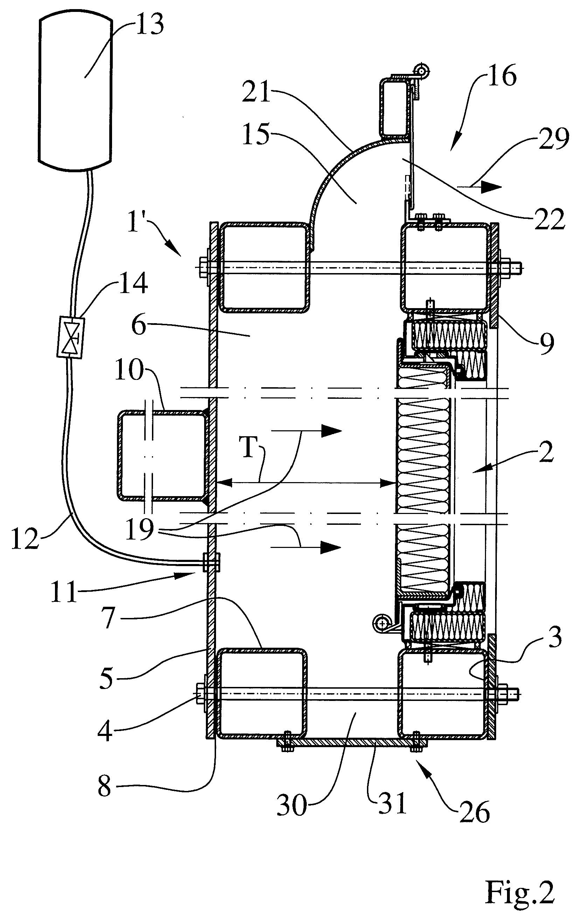

In der Figur 2 ist die Vorrichtung 1' analog zu der Vorrichtung 1 gemäß der Figur 1 an ihrer ersten seitlichen Stirnseite 16 mit einer Entlastungsöffnung 15 mit einem im Querschnitt viertelkreisförmigen Umlenkelement 21 ausgestattet, wobei die Austrittsöffnung 22 nicht - wie bei der Figur 1 - zu der dem Bauelement 2 abgewandten Seite hin zeigt, sondern zu der dem Bauelement 2 zugewandten Seite hin, so dass das die Austrittsöffnung 22 verlassene Fluid, das mit einem Pfeil 29 angedeutet ist, parallel und in die selbe Richtung strömt, wie die Druckwelle, die auf das Bauelement 2 wirkt und mit den Pfeilen 19 angedeutet ist.

Auf seiner gegenüberliegenden Stirnseite 26 ist ein Spalt 30 zwischen dem Halterahmen 3 und dem Kammerrahmen 7 mit einer angeschraubten Platte 31 verschlossen, so dass dort keine Entlastungsöffnung vorliegt.

Gemäß der Erfindung ist es möglich, entweder eine, zwei, drei oder alle vier Stirnseiten mit derselben oder mit verschiedenen Entlastungsöffnungen zu versehen.

Zur Überprüfung des Drucks in der Druckkammer 6, ist letztgenannte mit mindestens einem nicht gezeigten Drucksensor ausgestattet, dessen aufgezeichnete Daten zu Kontrollzwecken von einer ebenfalls nicht gezeigten Steuereinheit erfasst werden. In einem gleichfalls nicht gezeigten Computer lassen sich die Steuerzeiten für verschiedene Testprozeduren abspeichern, die sich hinsichtlich des Maximaldrucks, des Druckgradienten in der Anschwell- und Abschwellphase, des Impulses, der Einwirkungsdauer sowie der Öffnung oder Schließung der Entlastungsöffnungen unterscheiden können. Bei entsprechender Einstellung der vorgenannten Parameter ist es somit möglich, eine Erdbebensimulation durchzuführen, bei der leichte bis schwere Druckbelastungen immer wiederkehrend über einen längeren Zeitraum auftreten. Auch können bei entsprechender Einstellung der Parameter Unfälle in Raffinerien simuliert werden, deren Belastung sich durch einen langsamen Druckaufbau (geringer Gradient) mit geringem Spitzendruck und eine lange Einwirkzeit auszeichnet.

### In den Figuren sind

- 1, 1': Vorrichtung
- 2: Bauelement
- 3: Halterahmen
- 4: Schrauben
- 5: Wand
- 6: Druckkammer
- 7: Kammerrahmen
- 8: Dichtstreifen
- 9: Flachprofil
- 10: Profil
- 11: Anschweißnippel
- 12: Verbindungsleitung
- 13: Druckbehälter
- 14: Absperrelement
- 15: Entlastungsöffnung
- 16: erste seitliche Stirnseite
- 17: Entlastungsquerschnitt
- 18: Belastungsebene
- 19: Pfeil
- 20: Oberfläche
- 21: Umlenkelement
- 22: Austrittsöffnung
- 23: Pfeil
- 24: Klappe
- 25: Anschlag
- 26: seitliche Stirnseite
- 27: Druck-Ableitplatte
- 28: Abstandhalter
- 29: Pfeil
- 30: Spalt
- 31: Platte

## Patentansprüche

1. Verfahren zum Testen eines flächigen Bauelements (2) bezüglich Beständigkeit gegenüber Druckeinwirkung mit den folgenden Verfahrensschritten:
a) Das Bauelement (2) wird in kraftübertragender Weise in einem Halterahmen (3) eingebaut;
b) der mit dem Bauelement (2) versehene Halterahmen (3) wird so an bzw. vor einer Wand (5) montiert, dass zwischen Rahmenschenkeln des Halterahmens (3), dem Bauelement (2) und der Wand (5) eine gegenüber der Umgebung abgegrenzte Druckkammer (6) gebildet wird;
c) mindestens ein Druckbehälter (13) wird mit einem kompressiblen Fluid gefüllt, bis in dem Druckbehälter (13) ein Druck p_{B} herrscht, der größer als ein Umgebungsdruck p_{U} ist;
d) mindestens ein Absperrelement (14) einer Absperreinrichtung wird von einer Sperrstellung in eine Öffnungsstellung überführt, wodurch ein freier Verbindungsquerschnitt von dem Druckbehälter (13) zu der Druckkammer (6) geschaffen wird, wodurch wiederum in der Druckkammer (6) in einer von dem Bauelement (2) definierten Belastungsebene (18) ein das Bauelement (2) beaufschlagender Überdruck von mindestens 0,1 bar, vorzugsweise mindestens 0,2 bar, weiter vorzugsweise von 0,5 bar, weiter vorzugsweise von 1,0 bar und noch weiter vorzugsweise von 2,0 bar, erzeugt wird, wobei
e) Die Überführung des Absperrelements (14) der Absperreinrichtung von der Schließstellung in die Öffnungsstellung erfolgt zerstörungsfrei und reversibel, wobei die Absperreinrichtung in mindestens einer Verbindungsleitung (12) zwischen der Druckkammer (6) und dem Druckbehälter (13) angeordnet ist;
f) während der Druckeinwirkung des Fluids auf das Bauelement (2) wird aus der Druckkammer (6) durch mindestens eine Entlastungsöffnung (15) Fluid abgelassen,
**dadurch gekennzeichnet, dass** die mindestens eine Entlastungsöffnung (15) durch ein wahlweise freigebendes oder verschließendes Entlastungsventil gebildet wird, das als Rückschlagventil in Form eines Klappenventils ausgebildet ist, das vorzugsweise lediglich eine Druckentlastung der Druckkammer (6) zulässt.

2. Verfahren nach Anspruch 1, **dadurch gekennzeichnet, dass** das Ablassen des Fluids während der gesamten Zeit der Druckeinwirkung auf das Bauelement (2) erfolgt oder nur während eines Zeitintervalls, dessen Anfangszeit vorzugsweise nach einer Startzeit liegt, zu der das Absperrelement (14) der Absperreinrichtung in die Öffnungsstellung überführt wird und dessen Endzeit vorzugsweise vor oder nach einer Schließzeit liegt, zu der das Absperrelement (14) der Absperreinrichtung wieder in die Schließstellung überführt wird.

3. Verfahren nach Anspruch 1 oder 2, **dadurch gekennzeichnet, dass** die Strömungsrichtung des Fluids in einen in die Druckkammer (6) mündenden Mündungsquerschnitt der Verbindungsleitung (12) abweicht von der Strömungsrichtung des Fluids beim Austritt aus der Entlastungsöffnung (15), wobei vorzugsweise die Richtung der Strömung des Fluids beim Austritt aus der Entlastungsöffnung (15) senkrecht zu einer durch das Bauelement (2) definierten Belastungsebene (18) verläuft.

4. Vorrichtung (1, 1') zum Testen eines flächigen Bauelements (2) bezüglich Beständigkeit gegenüber einer Druckeinwirkung, umfassend
a) einen Halterahmen (3), in dem das Bauelement (2) in kraftübertragender Weise befestigbar ist;
b) eine Wand (5), an der der Halterahmen (3) so montierbar ist, dass zwischen Rahmenschenkeln des Halterahmens (3), dem Bauelement (2) und der Wand (5) eine gegenüber der Umgebung abgegrenzte Druckkammer (6) gebildet ist;
c) einen Druckbehälter (13), der mit einem kompressiblen Medium bis zu einem Druck p_{B}, der größer als der Umgebungsdruck p_{U} ist, befüllbar ist;
d) mindestens eine Verbindungsleitung (12), die von dem Druckbehälter (13) zu der Druckkammer (6) führt, und
e) eine ein Absperrelement (14) aufweisende Absperreinrichtung, die in einer Schließstellung des Absperrelementes (14) den Druckbehälter (13) und die Druckkammer (6) druckmäßig von einander trennt und in einer Öffnungsstellung des Absperrelements (14) einen Verbindungsquerschnitt zwischen dem Druckbehälter (13) und der Druckkammer (6) frei gibt, wobei
f) das Absperrelement (14) zerstörungsfrei von der Schließstellung in die Öffnungsstellung und umgekehrt überführbar ist und die Absperreinrichtung in der mindestens einen Verbindungsleitung (12) angeordnet ist,
g) wobei mindestens eine die Druckkammer (6) mit der Umgebung verbindende Entlastungsöffnung (15) vorhanden ist,
**gekennzeichnet durch** mindestens ein die mindestens eine Entlastungsöffnung (15) wahlweise freigebendes oder verschließendes Entlastungsventil, das als Rückschlagventil in Form eines Klappenventils ausgebildet ist, das vorzugsweise lediglich eine Druckentlastung der Druckkammer (6) zulässt.

5. Vorrichtung nach Anspruch 4, **dadurch gekennzeichnet, dass** die mindestens eine Entlastungsöffnung (15), vorzugsweise mehrere Entlastungsöffnungen (15), in mindestens einer die Wand mit dem Rahmen verbindenden Stirnseite (16, 26), vorzugsweise in mehreren Stirnseiten (16, 26), angeordnet ist bzw. sind.

6. Vorrichtung nach Anspruch 4 oder 5, **dadurch gekennzeichnet, dass** ein Entlastungsquerschnitt (17) der mindestens einen Entlastungsöffnung (15) parallel zu der Belastungsebene (18) ausgerichtet ist.

7. Vorrichtung nach einem der Ansprüche 4 bis 6, **gekennzeichnet durch** im Querschnitt viertelkreisförmige Umlenkelemente (21), mit denen eine parallel zu der Belastungsebene (18) gerichtete Strömung des Fluids um 90° in eine senkrecht zu der Belastungsebene (18) gerichtete Strömung umlenkbar ist, wobei vorzugsweise eine Tangentialebene an ein Umlenkelement (21) mit der Belastungsebene (18) oder einer von Vorderseiten der Rahmenschenkel gebildeten Rahmenebene zusammenfällt.

8. Vorrichtung nach einem der Ansprüche 4 bis 7, **dadurch gekennzeichnet, dass** eine parallel zu dem jeweiligen Rahmenschenkel gemessene Länge der zugeordneten Entlastungsöffnung (15), mindestens 50 %, vorzugsweise mindestens 70 %, vorzugsweise mindestens 80 %, der entsprechenden parallelen Länge des Bauelements (2) aufweist.

9. Vorrichtung nach einem der Ansprüche 4 bis 8, **dadurch gekennzeichnet, dass** die Größe der mindestens einen Entlastungsöffnung (15) einstellbar ist, vorzugsweise mittels eines Schiebeelements oder eines abnehmbaren Abdeckelements, das jeweils die Entlastungsöffnung (15) unterschiedlich weit überdeckt.

10. Vorrichtung nach einem der Ansprüche 4 bis 9, **dadurch gekennzeichnet, dass** die Fläche eines von der Entlastungsöffnung (15) gebildeten Entlastungsquerschnitts (17) zwischen 50 cm² und 100 cm², vorzugsweise zwischen 200 cm² und 1000 cm² beträgt.

11. Vorrichtung nach einem der Ansprüche 4 bis 10, **dadurch gekennzeichnet, dass** ein minimaler Abstand zwischen einem Mündungsquerschnitt der Verbindungsleitung (12) zwischen dem Druckbehälter (13) und der Druckkammer (6) und einer Entlastungsöffnung (15) mindestens 10 mm vorzugsweise 40 mm, beträgt.

## Claims

1. A method of testing a flat construction element (2) with regard to resistance to a pressure effect, with the following process steps:
a) the construction element (2) is installed in a support frame (3) in a force-transmitting manner;
b) the support frame (3) provided with the construction element (2) is assembled at or in front of a wall (5) in such a way that a pressure chamber (6) delimited with respect to the surroundings is formed between the frame legs of the support frame (3), the construction element (2) and the wall (5);
c) at least one pressure container (13) is filled with a compressible fluid until a pressure p_{B} prevails in the pressure container (13), said pressure being greater than an ambient pressure Pᵤ;
d) at least one blocking element (14) of a blocking device is transferred from a blocking position into an open position, as a result of which a free connection cross-section is created from the pressure container (13) to the pressure chamber (6), as a result of which an excess pressure of at least 0.1 bar, preferably at least 0.2 bar, more preferably of 0.5 bar, more preferably of 1.0 bar and even more preferably of 2.0 bar acting on the construction element (2) is in turn generated in the pressure chamber (6) in a loading plane (18) defined by the construction element (2), wherein
e) the transfer of the blocking element (14) of the blocking device from the closed position into the open position takes place in a non-destructive and reversible manner, wherein the blocking device is arranged in at least one connecting line (12) between the pressure chamber (6) and the pressure container (13);
f) fluid is drained from the pressure chamber (6) through at least one relief opening (15) during the pressure effect of the fluid on the construction element (2),
**characterised in that** the at least one relief opening (15) is formed by an optionally opening or closing relief valve, which is constituted as a non-return valve in the form of a flap valve, which preferably permits only a pressure relief of the pressure chamber (6).

2. The method according to claim 1, **characterised in that** the draining of the fluid takes place during the entire time of the pressure effect on the construction element (2) or only during a time interval, the start time whereof is preferably after a start time at which the blocking element (14) of the blocking device is transferred into the open position and the end time whereof is preferably before or after a closing time at which the blocking element (14) of the blocking device is again transferred into the closed position.

3. The method according to claim 1 or 2, **characterised in that** the flow direction of the fluid into a mouth cross-section of the connecting line (12) emerging into the pressure chamber (6) diverges from the flow direction of the fluid during the exit from the relief opening (15), wherein the direction of the flow of the fluid during the exit from the relief opening (15) preferably runs normal to a loading plane (18) defined by the construction element (2).

4. A device (1, 1') for testing a flat construction element (2) with regard to resistance to a pressure effect, comprising
a) a support frame (3) in which the construction element (2) can be fixed in a force-transmitting manner;
b) a wall (5) at which the support frame (3) is installed in such a way that a pressure chamber (6) delimited with respect to the surroundings is formed between the frame legs of the support frame (3), the construction element (2) and the wall (5);
c) a pressure container (13) which can be filled with a compressible medium up to a pressure p_{B} which is greater than ambient pressure Pᵤ;
d) at least one connecting line (12), which leads from the pressure container (13) to the pressure chamber (6), and
e) a blocking device comprising a blocking element (14) which, in a closed position of the blocking element (14), separates the pressure container (13) and the pressure chamber (6) from each other in terms of pressure and, in an open position of the blocking element (14), opens the connection cross-section between the pressure container (13) and the pressure chamber (6), wherein
f) the blocking element (14) can be transferred from the closed position into the open position and vice versa in a non-destructive manner and the blocking device is arranged in the at least one connecting line (12),
g) wherein at least one relief opening (15) connecting the pressure chamber (6) to the surroundings is provided,
**characterised by** at least one relief valve which optionally opens or closes the at least one relief opening (15), which relief valve is constituted as a non-return valve in the form of a flap valve, which preferably permits only a pressure relief of the pressure chamber (6).

5. The device according to claim 4, **characterised in that** the at least one relief opening (15), preferably a plurality of relief openings (15), is or are arranged in at least one end face (16, 26), preferably in a plurality of end faces (16, 26), which connect the wall to the frame.

6. The device according to claim 4 or 5, **characterised in that** a relief cross-section (17) of the at least one relief opening (15) is aligned parallel with the loading plane (18).

7. The device according to any one of claims 4 to 6, **characterised by** deflection elements (21) which are quadrant-shaped in cross-section and with which a flow of the fluid directed parallel to the loading plane (18) can be deflected through 90° into a flow directed normal to the loading plane (18), wherein a tangential plane to a deflection element (21) preferably coincides with the loading plane (18) or a frame plane formed by front sides of the frame legs.

8. The device according to any one of claims 4 to 7, **characterised in that** a length of the assigned relief opening (15) measured parallel to the respective frame leg has at least 50%, preferably at least 70%, preferably at least 80%, of the corresponding parallel length of the construction element (2).

9. The device according to any one of claims 4 to 8, **characterised in that** the size of the at least one relief opening (15) is adjustable, preferably by means of a slide element or a removable cover element, which in each case covers the relief opening (15) to a differing extent.

10. The device according to any one of claims 4 to 9, **characterised in that** the area of a relief cross-section (17) formed by the relief opening (15) amounts to between 50 cm² and 100 cm², preferably between 200 cm² and 1000 cm².

11. The device according to any one of claims 4 to 10, **characterised in that** the minimum distance between a mouth cross-section of the connecting line (12) between the pressure container (13) and the pressure chamber (6) and a relief opening (15) amounts to at least 10 mm, preferably 40 mm.

## Revendications

1. Procédé destiné à tester un élément de construction (2) plan en ce qui concerne la résistance à la pression, comprenant les étapes de procédé suivantes :
a) on insère l'élément de construction (2) de manière transmettant l'effort dans un cadre de maintien (3) ;
b) on monte le cadre de maintien (3) ainsi muni de l'élément de construction (2) sur ou à l'avant d'une paroi (5) de sorte qu'entre des branches de cadre d'un cadre de maintien (3), l'élément de construction (2) et la paroi (5), il se forme une chambre de compression (6) délimitée par rapport à l'environnement ;
c) on remplit d'un fluide compressible au moins un réservoir sous pression (13), jusqu'à ce que dans le réservoir sous pression (13), il règne une pression p₈ qui est supérieure à la pression environnementale P_{U} ;
d) on fait passer d'une position de sectionnement dans une position d'ouverture au moins un élément de sectionnement (14) d'un dispositif de sectionnement, ce qui a pour effet de créer une section transversale de liaison libre du réservoir sous pression (13) vers la chambre de compression (6), suite à quoi, il est généré de nouveau dans la chambre de compression (6), dans un plan de charge (18) défini par l'élément de construction (2) une surpression d'au moins 0,1 bar, de préférence d'au moins 0,2 bar, de manière encore préférée d'au moins 0,5 bar, de manière plus préférée d'au moins 1,0 bar et de manière encore plus préférée d'au moins 2,0 bar à laquelle est soumis l'élément de construction (2),
e) le passage de l'élément de sectionnement (14) du dispositif de sectionnement de la position de fermeture dans la position d'ouverture s'effectue de manière non destructive et réversible, le dispositif de sectionnement étant placé dans au moins un conduit de liaison (12) entre la chambre de compression (6) et le réservoir sous pression (13) ;
f) pendant que la pression du fluide agit sur l'élément de construction (2), on laisse échapper du fluide hors de la chambre de compression (6) par au moins un orifice de décharge (15),
**caractérisé en ce que** l'au moins un orifice de décharge (15) est formé par une soupape de décharge qui libère ou qui ferme au choix, qui est conçue sous en tant que clapet anti-retour, sous la forme d'un papillon, qui de préférence n'admet qu'une décompression de la chambre de compression (6).

2. Procédé selon la revendication 1, **caractérisé en ce que** l'évacuation du fluide s'effectue sur l'ensemble du temps d'action de la pression sur l'élément de construction (2) ou seulement pendant un intervalle de temps dont l'instant de début est de préférence postérieur à un instant de démarrage auquel l'élément de sectionnement (14) du dispositif de sectionnement passe en position d'ouverture et dont l'instant de fin est de préférence antérieur ou postérieur à un instant de fermeture auquel l'élément de sectionnement (14) du dispositif de sectionnement passe de nouveau en position de fermeture.

3. Procédé selon la revendication 1 ou la revendication 2, **caractérisé en ce que** le sens d'écoulement du fluide dans une section transversale d'embouchure débouchant dans la chambre de compression (6) du conduit de liaison (12) diffère du sens d'écoulement du fluide à la sortie de l'orifice de décharge (15), de préférence la direction de l'écoulement du fluide à la sortie de l'orifice de décharge (15) s'écoulant à la perpendiculaire d'un plan de charge (18) défini par l'élément de construction (2).

4. Dispositif (1, 1') destiné à tester un élément de construction (2) plan en ce qui concerne la résistance à l'effet de la pression, comprenant
a) un cadre de maintien (3) dans lequel l'élément de construction (2) est susceptible d'être fixé de manière à transmettre la force ;
b) une paroi (5) sur laquelle le cadre de maintien (3) est susceptible d'être monté de telle sorte qu'entre des branches de cadre du cadre de maintien (3), l'élément de construction (2) et la paroi (5), il soit formé une chambre de compression (6) délimitée par rapport à l'environnement ;
c) un réservoir sous pression (13) qui est susceptible d'être rempli d'un milieu compressible jusqu'à une pression P_{B} qui est supérieure à la pression ambiante P_{U} ;
d) au moins un conduit de liaison (12) qui conduit du réservoir sous pression (13) vers la chambre de compression (6) et
e) un dispositif de sectionnement comportant un élément de sectionnement (14), qui dans une position de fermeture de l'élément de sectionnement (14) sépare au niveau de la pression le réservoir sous pression (13) et la chambre de compression (6) et dans une position d'ouverture de l'élément de sectionnement (14) libère une section transversale de liaison entre le réservoir sous pression (13) et la chambre de compression (6),
f) l'élément de sectionnement (14) étant susceptible d'être passé de manière non destructive de la position de fermeture dans la position d'ouverture et inversement et le dispositif de sectionnement étant placé dans l'au moins un conduit de liaison (12),
g) au moins un orifice de décharge (15) reliant la chambre de compression (6) à l'environnement étant présent,
**caractérisé par** au moins une soupape de décharge libérant ou fermant au choix l'au moins un orifice de décharge (15), qui est conçu en tant que clapet anti-retour sous la forme d'un papillon, qui de préférence n'admet qu'une décompression de la chambre de compression (6).

5. Dispositif selon la revendication 4, **caractérisé en ce que** l'au moins un orifice de décharge (15), de préférence plusieurs orifices de décharge (15) est ou sont placé(s) dans au moins une face frontale (16, 26) reliant la paroi avec le cadre, de préférence dans plusieurs faces frontales (16, 26).

6. Dispositif selon la revendication 4 ou la revendication 5, **caractérisé en ce qu'**une section transversale de décharge (17) de l'au moins un orifice de décharge (15) est orientée à la parallèle du plan de charge (18).

7. Dispositif selon l'une quelconque des revendications 4 à 6, **caractérisé par** des éléments de renvoi (21) à section transversale en forme de quadrant à l'aide desquels un écoulement du fluide dirigé à la parallèle du plan de charge (18) est susceptible d'être dévié de la valeur de 90° dans un écoulement dirigé à la perpendiculaire du plan de charge (18), de préférence un plan tangentiel sur un élément de renvoi (21) coïncidant avec le plan de charge (18) ou un plan de cadre formé par des faces avant des branches de cadre.

8. Dispositif selon l'une quelconque des revendications 4 à 7, **caractérisé en ce qu'**une longueur de l'orifice de décharge (15) associé, mesurée à la parallèle de la branche de cadre concernée présente au moins 50 %, de préférence au moins 70 %, de préférence au moins 80 % de la longueur parallèle correspondante de l'élément de construction (2).

9. Dispositif selon l'une quelconque des revendications 4 à 8, **caractérisé en ce que** la dimension de l'au moins un orifice de décharge (15) est réglable, de préférence au moyen d'un élément curseur ou d'un élément de protection amovible qui recouvre chaque fois plus ou moins loin l'orifice de décharge (15).

10. Dispositif selon l'une quelconque des revendications 4 à 9, **caractérisé en ce que** la surface de la section transversale de décharge (17) formée par l'orifice de décharge (15) se situe entre 50 cm² et 100 cm², de préférence entre 200 cm² et 1000 cm².

11. Dispositif selon l'une quelconque des revendications 4 à 10, **caractérisé en ce qu'**un écart minimal entre une section transversale du conduit de liaison (12) entre le réservoir sous pression (13) et la chambre de compression (6) et un orifice de décharge (15) est d'au moins 10 mm, de préférence de 40 mm.
